# EUROPEAN PATENT APPLICATION

(11) **EP 2 060 349 A1**
(43) Date of publication of application: **20.05.2009**
(21) Application number: 07830339.3
(22) Date of filing: 23.10.2007
(51) Int. Cl.: B23B 51/00, B23B 51/06

(54) **METHOD FOR MANUFACTURE OF THROUGH-HOLE**

(30) Priority: 17.11.2006 JP 2006311950
(71) Applicant: UNITAC, Incorporated, Amagasaki-shi, Hyogo 661-0033 (JP)
(72) Inventor: NOMURA, Takuji, Amagasaki-shi Hyogo 661-0033 (JP); SAKAI, Makoto, Amagasaki-shi Hyogo 661-0033 (JP)
(74) Representative: Vossius & Partner
(86) International application number: PCT/JP2007/070605
(87) International publication number: WO 2008/059697

(57) **Abstract**

The present invention provides a means capable of preventing generation of a spiral mark on an inner circumferential face of a through-hole and obtaining a superior appearance and high working accuracy when the hole is formed on a work material by a drill head provided with a brazed-type cutting blade.
In forming a through-hole H on a work material W by a drill head 1A with cutting blades 3A to 3C brazed to cutting blade mounting seats 13a to 13c, a drill head provided with roundness R on a blade edge outer end portion 31a of a cutting blade 3A responsible for cutting of the outermost periphery is used as the drill head 1A.

## Description

### [Technical Field]

The present invention relates to a method for forming a through-hole on a work material mainly made of a metallic material with the use of a drill head provided with a brazed-type cutting blade.

### [Background Art]

A drill head attached to a distal end of a drill for deep-hole cutting includes a drill head integrally formed with a cutting blade on itself, a drill head concavely provided with a cutting blade mounting seat to which a cutting blade tip is brazed and a drill head concavely provided with a cutting blade mounting seat on which a throw-away tip is detachably screwed. They are appropriately used according to a material of a work material, a drilling diameter, working conditions, etc.

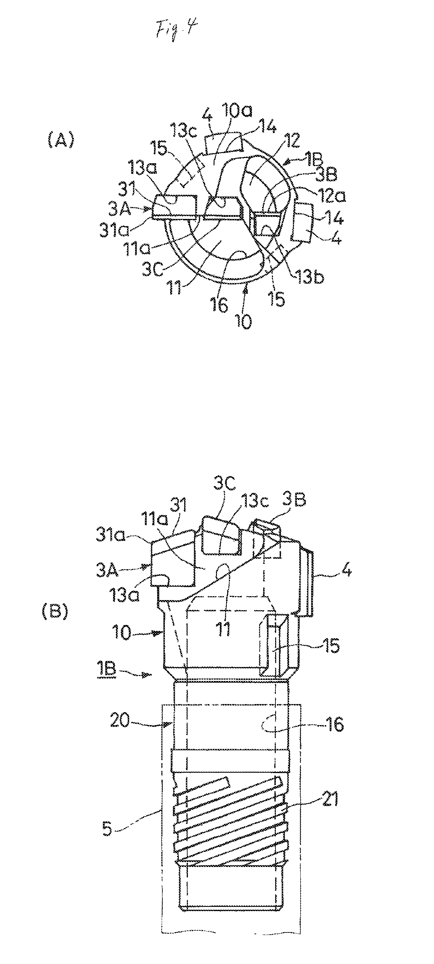

FIGS. 4A and 4B illustrate a general deep-hole cutting drill head 1B provided with three brased-type cutting blades. The drill head 1B is composed of a roughly cylindrical head body 10 provided with cutting blades 3A to 3C along end walls 11a and 12a which extend in an approximately common radial direction of chip discharging ports 11 and 12 which are opened in large and small fan shapes on a front end face 10a, and a cylindrical screw shank 20 provided with a male thread 21 on an area slightly to the rear portion of an outer circumferential face. The cutting blades 3A to 3C are generally formed by brazing cutting blade tips made of a hard material such as cemented carbide or cermet to cutting blade mounting seats 13a to 13c concavely provided on the end walls 11a and 12a of the head body 10 made of steel. With a cutting area by an intermediate cutting blade 3B partly overlapping with cutting areas by an outer periphery side cutting blade 3A and a central side cutting blade 3C, the cutting blades cooperate to serve as a single cutting blade. In FIGS. 4A and 4B, the head body 10 is composed of guide pads 4 made of a hard material and brazed to respective pad mounting seat 14 concavely provided at two locations at a front portion of the outer circumferential face, and a pair of chucking groove portions 15 formed at radially opposed positions at a rear portion of the circumferential face.

The cutting blade tips made of a hard material to be formed into the cutting blades 3A to 3C are manufactured by die forming and sintering by means of a powder metallurgy method. Since both inner and outer end portions of inclined and linear blade edges are easily chipped due to pressure in forming if pointed, the both end portions are generally configured to be rounded. In a brazed-type cutting blade, on the other hand, positioning accuracy of the blade edge cannot be set exactly due to interposition of a brazing material in brazing. Therefore, in the case of providing the three cutting blades 3A to 3C for example, cutting blade tips for the intermediate cutting blade 3B and the central side cutting blade 3C are configured such that both inner and outer end portions of the blade edges are rounded are simply brazed to the cutting blade mounting seats 13b and 13c. For the outer periphery side cutting blade 3A, however, a cutting diameter of the drill head is determined by an outer edge position of the cutting blade 3A. Therefore, a cutting blade tip provided with a polishing stock on the outer edge side in advance is manufactured, and then brazed to the cutting blade mounting seat 13a. After that, the outer edge side is polished so as to ensure predetermined positioning accuracy. As a result, the outer periphery side cutting blade 3A has an angularly pointed outer end portion 31a of the inclined blade edge 31 as shown, except a case where an individual blade edge form is required in cutting of a deep hole with a bottom due to a configuration of the bottom of the hole.

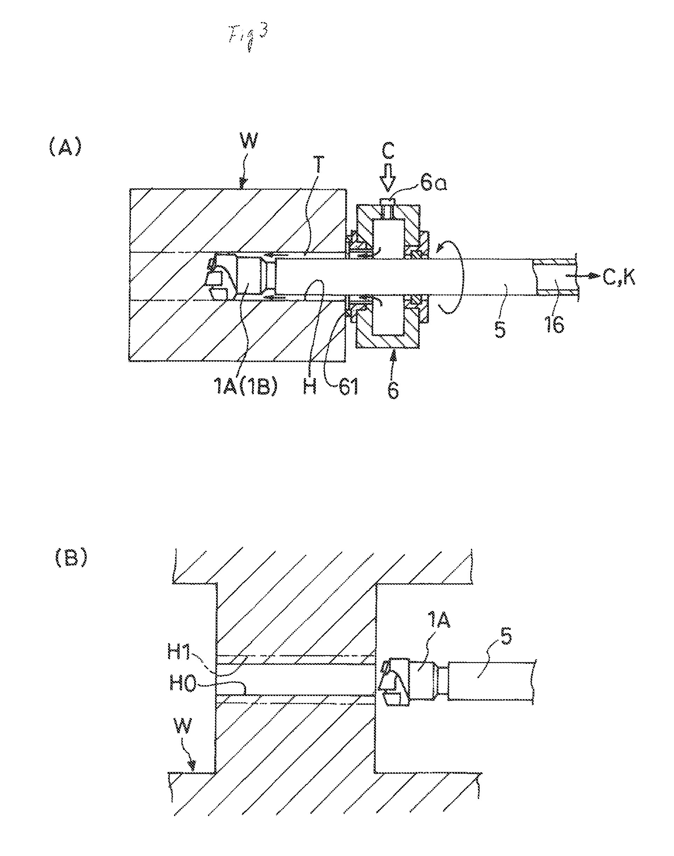

In use of the drill head 1B, the screw shank 20 is inserted into and coupled in threading relation with a distal end portion of a circular tubular tool shank (also referred to as a boring bar) 5 of the deep-hole cutting drill, whereby an inside of the drill head 1B and a hollow interior of the tool shank 5 are communicated and constitute a chip discharging passage 16, as shown in FIG. 4B. The deep-hole cutting is carried out by coupling the tool shank 5 with a spindle of a machine tool to be rotatingly driven or reversely by rotating a work material W, as shown in FIG. 3(A). Since a coolant C is supplied in the manner of an external supply, a coolant supplying jacket 6 that encloses the tool shank 5 oil-tight as shown is used, and the coolant C is introduced into the jacket 6 from a feed port 6a with high pressure, with the jacket 6 press-contacted with the work material W via a seal ring 61. The introduced coolant C is supplied to a distal end side of the drill head 1B through a gap T between the outer circumferential face of the tool shank 5 and the inner circumferential face of a cutting hole H, entered into the chip discharging passage 16 from chip discharging ports 11 and 12 (FIG. 4(A)) of the drill head 1B together with a chip K generated in a cutting region and then discharged outside from a proximal end side of the tool shank 5.

### [Disclosure of the Invention]

### [Problem to be Solved by the Invention]

It is known that a spiral mark (a spiral pattern) often appears on an inner circumferential face of a through-hole when the hole is formed on a work material by a conventional drill head provided with a brazed-type cutting blade such as mentioned above. The through-hole with the spiral mark is not attractive as an appearance in its finish, and further is not suitable in terms of working accuracy because the spiral mark microscopically results from unevenness on the inner circumferential face of the hole.

Accordingly, the inventors analyzed a multitude of working data, repeatedly carried out actual machine tests varying cutting conditions and examined various facets in order to find a cause for the spiral mark. As a result, it was found out that if the pointed blade edge outer end portion of the outer periphery side cutting blade bit into the work material due to a factor of some kind such as vibrations during drilling so that even a subtle step was produced on the inner circumference of the hole, the blade edge became snagged on the step part, thereby changing cutting resistance, which caused differences in rhythm of cutting torque, which led to generation of the spiral mark.

Therefore, the present invention was made in view of the foregoing circumstances and it is an object of the present invention to provide a means capable of preventing generation of a spiral mark on an inner circumferential face of a through-hole and thus capable of obtaining a superior appearance and high working accuracy in forming the through-hole on a work material by a drill head provided with a brazed-type cutting blade.

### [Means for Solving the Problem]

In order to achieve the foregoing object, a method for forming a through-hole in accordance with claim 1 of the present invention is **characterized in that**, if shown with reference numerals in the drawings, when a through-hole H is formed on a work material W by a drill head 1A with cutting blades 3A to 3C brazed to cutting blade mounting seats 13a to 13c, a drill head provided with roundness R on a blade edge outer end portion 31a of the cutting blade 3A responsible for cutting of the outermost periphery is used as the drill head 1A.

The invention of claim 2 is **characterized in that** the roundness R of the blade edge outer end portion 31a is 0.1 to 0.5 mm in radius r in the method for forming a through-hole as recited in claim 1.

In the method for forming a through-hole as recited in claim 1 or 2, the invention of claim 3 is **characterized in that** the drill head 1A assumes a cylindrical shape with a front end face 10a provided with chip discharging ports 11 and 12 and an interior constituting a chip discharging passage 16 communicating with the chip discharging ports 11 and 12, and cutting blades 3A to 3C are brazed to side wall portions 11a and 12a extending roughly radially and facing the chip discharging ports 11 and 12.

### [Effects of the Invention]

According to the invention as recited in claim 1, when a through-hole is formed on a work material by a drill head provided with a brazed-type cutting blade, a blade edge outer end portion of a cutting blade responsible for cutting of the outermost periphery in the drill head has roundness, thereby rendering difficult to cause a bite by the blade edge outer end portion of the outer periphery side cutting blade into the work material during drilling. Production of a spiral mark on an inner circumferential face of the hole due to differences in the rhythm of the cutting torque derived from the bite can be prevented, and thus a through-hole with a superior appearance and high accuracy can be obtained.

According to the invention as recited in claim 2, the blade edge outer end portion of the cutting blade responsible for cutting of the outermost periphery has roundness with a certain radius, and thus production of a spiral mark can be more reliably prevented.

According to the invention as recited in claim 3, the drill head has a structure that a chip produced in the cutting region can be discharged together with the coolant from the chip discharging ports at the front end face through the internal chip discharging passage. Therefore, high cutting efficiency can be obtained.

### [Brief Description of the Drawings]

FIG. 1 illustrates an example of a drill head used in a method for forming a through-hole in accordance with the present invention, and FIG. 1A is a plan view, FIG. 1B is a front view and FIG. 1C is an enlarged view of a circle C of a phantom line in FIG. 1B.
FIG. 2 illustrates mounting of cutting blade tips on a head body of the drill head, and FIG. 2A is a front view before mounting of the cutting blade tips and FIG. 2B is a front view after mounting of the same.
FIG. 3 exemplifies a forming situation of a through-hole, and FIG. 3A is a longitudinal sectional side view of forming operation of a through-hole on a solid part of a work material and FIG. 3B is a longitudinal sectional side view of forming operation of a through-hole by cuttingly enlarging a diameter along a leading hole of a work material.
FIG. 4 illustrates an example of a conventional drill head used in a method for forming a through-hole, and FIG. 4A is a plan view and FIG. 4B is a front view.

### [Explanation of Symbols]

- 1A:: drill head
- 10a:: front end face
- 11, 12: chip discharging port
- 11a, 12a: end wall
- 13a-13c: cutting blade mounting seat
- 3A: outer periphery side cutting blade
- 3B: intermediate cutting blade
- 3C: central side cutting blade
- 30: cutting blade tip
- 31: blade edge
- 31a: outer end portion
- 32: cutting stock
- R: roundness
- r: radius

### [Best Mode for Carrying Out the Invention]

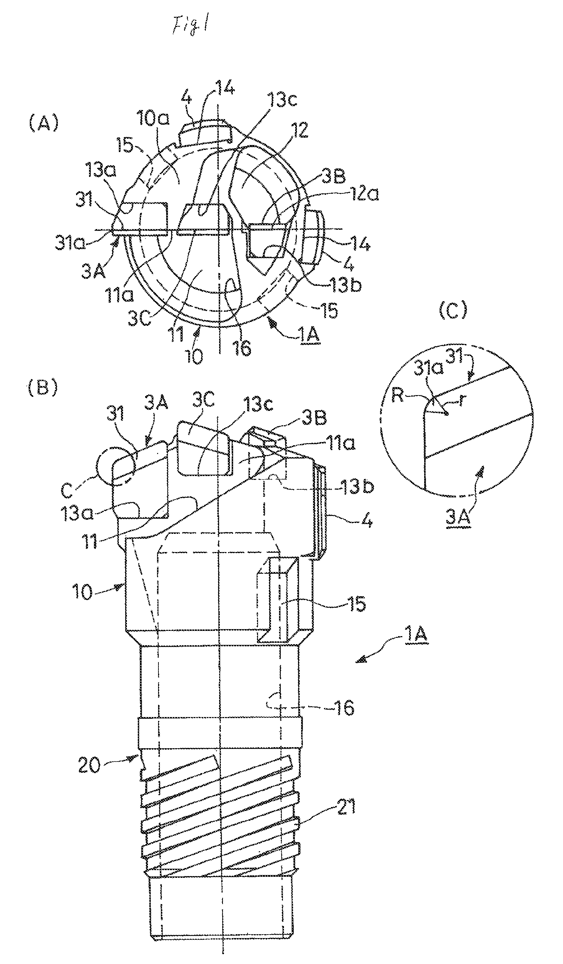

Now, an embodiment of the method for forming a through-hole in accordance with the present invention is described in detail with reference to the drawings. A drill head 1A used in the present invention and shown in FIGS. 1A to 1C is provided with three similar brazed-type cutting blades to the conventional drill head 1B (see FIG. 4) used in forming a through-hole and already mentioned above. To facilitate understanding in comparison with both, the same symbols are given to each component in common with or corresponding to the aforementioned cutting drill head 1B.

The drill head 1A is composed of a cylindrical head body 10 provided with chip discharging ports 11 and 12 on a front end face 10a thereof, the chip discharging ports 11 and 12 being open in large and small fan shapes, and a cylindrical screw shank 20 provided with a male thread 21 in an area slightly to the rear portion of the outer circumferential face, and the head body 10 and the screw shank 20 are integrated concentrically. Three of outer periphery side, intermediate and central side cutting blades 3A to 3C are brazed along end walls 11a and 12b which extend in an approximately common radial direction of the chip discharging ports 11 and 12 of the head body 10. As enlargedly shown in FIG. 1C, the drill head 1A is different from the drill head 1B in that an outer end portion 31a of an inclined blade edge 31 in the outer periphery side cutting blade 3A has roundness R.

On the outer circumferential face of the head body 10, guide pads 4 made of a hard material are brazed to respective pad mounting seats 14 concavely provided on two locations at the front side, and a pair of radially opposed chucking groove portions 15 and 15 are formed at the rear side. A hollow interior of the drill head 1A is communicated with the both chip discharging ports 11 and 12 at the front end side as a chip discharging passage 16 and is open to the rear end side.

For the three cutting blades 3A to 3C of the drill head 1A, cutting blade tips 30A to 30C made of a hard material such as cemented carbide or cermet are brazed to cutting blade mounting seats 13a to 13c concavely provided on the end walls 11a and 12a of the head body 10 made of steel. Since blade edge positioning accuracy cannot be set exactly due to interposition of a brazing material in brazing, the outer edge side of the outer periphery side cutting blade 3A is polished after the cutting blade tip 30A is brazed. More specifically, the three cutting blades 3A to 3C cooperate to serve as a single cutting blade partly overlapping their cutting areas. Therefore, some positioning variations are allowed with respect to both inner and outer end edges of the intermediate and central side cutting blades 3B and 3C and the inner end edge of the outer periphery side cutting blade 3A. On the other hand, exact positioning accuracy is required of the outer end edge of the outer periphery side cutting blade 3A, since its position determines a cutting diameter. Accordingly, the cutting blade tip 30A to be made into the outer periphery side cutting blade 3A is manufactured so as to leave a cutting stock on the outer edge side, which is polished after the brazing to the head body 10 to ensure the positioning accuracy.

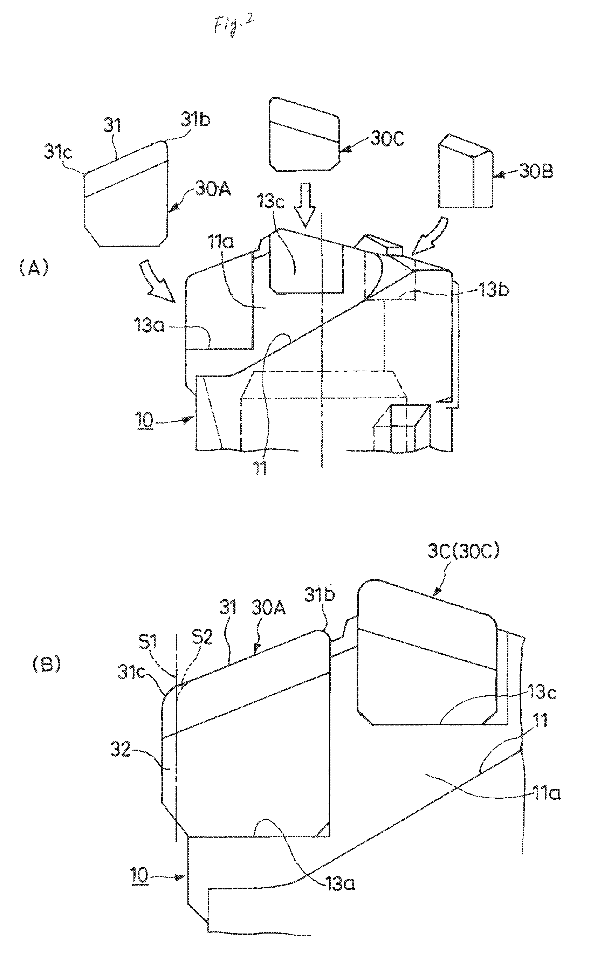

On the other hand, the cutting blade tips 30A to 30C made of a hard material are manufactured by die forming and sintering by means of a powder metallurgy method. Therefore, both end portions of inclined linear blade edges are configured to be rounded in order to prevent chipping due to pressure in forming. The both rounded end portions of the blade edges in the cutting blade tips 30B and 30C are made into both end portions of blade edges in the intermediate cutting blade 3B and central side cutting blade 3C as they are. However, the rounded outer end portion 31a of the blade edge 31 in the cutting blade tip 30A which is made into the periphery side cutting blade 3 constitutes a part removed by polishing the outer edge side after the foregoing brazing. For this reason, a cutting blade tip 30A provided with a polishing stock on the outer edge side in advance is manufactured, and brazed to the cutting blade mounting seat 13a. After that, as shown in FIG. 2B, the outer edge side is polishingly removed linearly, for example, up to a phantom line S1 to ensure predetermined positioning accuracy. In the drill head 1A used in the present invention, the outer end side of the cutting blade 31 is further polishingly removed into a rounded shape, for example, up to a phantom line S2, and made into the outer end portion 31a with roundness R as shown in FIGS. 1B and 1C. The removed part by polishing in two levels constitutes a cutting stock 32 of the cutting blade tip 30A.

In order to form a through-hole on a work material made of a metallic material with use of the drill head 1A as configured abode, the screw shank 20 of the drill head 1A is inserted into and coupled (FIG. 4(B)) in threading relation with the distal end of the circular tubular tool shank 5 of the deep-hole cutting drill, as shown in FIG. 3A. Then, the tool shank 5 is coupled with a spindle of a machine tool to be rotatingly driven, or reversely, the work material W is rotated for cutting. During the cutting, the coolant C is continuously supplied to the cutting region in the aforementioned external supply manner. The coolant C is entered into the chip discharging passage 16 from the chip discharging ports 11 and 12 of the drill head 1A together with a chip K generated in the cutting region, and discharged outside from the proximal end of the tool shank 5 through the hollow interior of the tool shank 5, whereby high cutting efficiency can be obtained.

According to the method for forming a through-hole, the outer periphery side cutting blade 3A which determines a cutting diameter of the drill head 1A is provided with the blade edge 31 whose outer end portion 31a has roundness R. Consequently, the outer end portion 31a of the blade edge 31 bites into the work material W with difficulty during drilling, and differences in the rhythm of the cutting torque resulting from steps involved in the bite are not generated. Since production of a spiral mark on the inner circumferential face of the hole can be prevented, the through-hole H to be formed comes to have a superior appearance and high dimensional accuracy.

FIG. 3A exemplifies a situation of drilling the through-hole H on a solid part of the work material W. As shown in FIG. 3B, however, the present invention can also be applied to a case where a through-hole H1 is formed in such a manner that the work material W is provided with a leading hole H0 beforehand, along which its circumferential face is cut to enlarge the diameter. It is noted that a spiral mark is possibly produced in deep-hole cutting with a bottom with the use of a conventional brazed-type drill head such as the drill head 1B exemplified in FIG. 4. However, the inside of the deep-hole with a bottom is dark and difficult to be identified visually, and an appearance failure on the inner circumferential face due to the spiral mark hardly constitutes a problem. Besides, there are many cases where exactitude of dimensional accuracy is not required of a hole with a bottom in terms of intended purposes. Therefore, the present invention is not directed to the formation of a hole with a bottom.

The drill head used in the method of the present invention is not limited to one provided with the exemplified three cutting blades 3A to 3C. As long as it is a brazed-type, the number of cutting blades may be 1, 2 or 4 or more (generally odd-number), and roundness R just has to be provided on a blade edge outer end portion of a cutting blade responsible for cutting of the outermost periphery. It is recommended that a radius r of the roundness R in this kind of blade edge outer end portion be set in the range of 0.1 to 0.5 mm in order to reliably prevent production of the aforementioned spiral mark.

The drill head 1A used in the exemplified embodiment is for a single tube system, that is, the system in which the coolant C externally supplied to the cutting region through the gap T between the cutting hole H and the tool shank 5 is discharged together with a chip K through the internal chip discharging passage 16. However, in the method of the present invention, a drill head for a double tube system, provided with a brazed-type cutting blade can also be used. In the double tube system, a tool shank of a drill composes a double cylinder with a central space as a chip discharging passage and an outer annular space as a coolant supplying passage. By coupling the drill head with a distal end of the outer cylinder in threading relation, a distal end of the inner cylinder abuts against an inner circumferential step portion of the drill head, so that a distal end side of the coolant supplying passage is closed. However, the coolant is delivered outside from a delivery hole provided on a peripheral wall portion of the drill head, and then supplied to the cutting region. Therefore, the drill head for the double tube system has substantially the same fundamental structure as the drill head for the single tube system already mentioned except for having the inner circumferential step portion and the delivery hole. A drill head for the double tube system, provided with roundness R on a blade edge outer end portion of a cutting blade responsible for cutting of the outermost periphery can be used in formation of a through-hole of the present invention.

## Claims

1. A method for forming a through-hole on a work material by a drill head with a cutting blade brazed to a cutting blade mounting seat, the method comprising:
using, as the drill head, a drill head provided with roundness on a blade edge outer end portion of a cutting blade responsible for cutting of the outermost periphery.

2. The method according to claim 1, wherein the roundness of the blade edge outer end portion is 0.1 to 0.5 mm in radius.

3. The method according to claim 1 or 2, wherein the drill head assumes a cylindrical shape with a front end face provided with a chip discharging port and an interior constituting a chip discharging passage communicating with the chip discharging port, and the cutting blade is brazed to a side wall portion extending roughly radially and facing the chip discharging port.
